# NEW EUROPEAN PATENT SPECIFICATION

(11) **EP 3 950 582 B2**
(45) Date of publication and mention of the opposition decision: **28.10.2026**
(45) Mention of the grant of the patent: 13.12.2023
(21) Application number: 20783738.6
(22) Date of filing: 26.03.2020
(51) Int. Cl.: C01B 21/068, C04B 35/593

(54) **SILICON NITRIDE POWDER AND PRODUCTION METHOD THEREFOR, AND PRODUCTION METHOD FOR SILICON NITRIDE SINTERED BODY**
SILICIUMNITRIDPULVER UND HERSTELLUNGSVERFAHREN DAFÜR UND HERSTELLUNGSVERFAHREN FÜR SILICIUMNITRIDSINTERKÖRPER
POUDRE DE NITRURE DE SILICIUM ET PROCÉDÉ DE PRODUCTION ASSOCIÉ ET PROCÉDÉ DE PRODUCTION DE CORPS FRITTÉ DE NITRURE DE SILICIUM

(30) Priority: 29.03.2019 JP 2019066158
(43) Date of publication of application: 09.02.2022
(73) Proprietor: Denka Company Limited, Tokyo 103-8338 (JP)
(72) Inventor: NAKAMURA Yuzo, Tokyo 103-8338 (JP); MIYASHITA Toshiyuki, Tokyo 103-8338 (JP)
(74) Representative: Hoffmann Eitle
(86) International application number: PCT/JP2020/013830
(87) International publication number: WO 2020/203695

(56) References cited:
- EP-A1- 2 832 687
- EP-A1- 3 020 686
- EP-A1- 3 156 366
- WO-A1-2013/146713
- DE-A1- 4 013 923
- JP-A- 2000 302 421
- JP-A- H0 532 405
- JP-A- H01 197 307
- JP-A- H04 114 908
- JP-A- H04 114 908
- JP-A- H06 329 404
- KAISER, G. ; SCHUBERT, H.: "The determination of oxygen in Si"3N"4 powder", JOURNAL OF THE EUROPEAN CERAMIC SOCIETY, ELSEVIER, AMSTERDAM, NL, vol. 11, no. 3, 1 January 1993 (1993-01-01), AMSTERDAM, NL, pages 253 - 262, XP024175062, ISSN: 0955-2219, DOI: 10.1016/0955-2219(93)90095-9
- WADA SHIGETAKA, KONDO YASUHITO, SUDO EIICHI, MAKI YASUYUKI: "Behavior of Oxygen and Carbon in Ball-Milled Si3N4 Powders during Heat Treatment and Sintering", JOURNAL OF THE CERAMIC SOCIETY OF JAPAN, NIPPON SERAMIKKUSU KYOKAI, JP, vol. 107, no. 7, 1 July 1999 (1999-07-01), JP , pages 611 - 614, XP093216212, ISSN: 0914-5400, DOI: 10.2109/jcersj.107.611
- SUNDERKÖTTER J D, E. GRALLATH, H. JENETT : "Combined bulk and surface analysis of oxygen species in Si3N 4 powders by means of carrier-gas heat-extraction methods and Auger electron spectrometry", FRESENIUS' JOURNAL OF ANALYTICAL CHEMISTRY, SPRINGER, DE, vol. 346, no. 1-3, 1 January 1993 (1993-01-01), DE , pages 237 - 240, XP093216215, ISSN: 0937-0633, DOI: 10.1007/BF00321422
- "ISO 17947:2014 Fine ceramics (advanced ceramics, advanced technical ceramics) — Methods for chemical analysis of fine silicon nitride powders", ISO NORM, ISO INTERNATIONAL STANDARD, 1 September 2014 (2014-09-01), pages 1 - 32, XP009557768
- TANAKA SATORU, JUNJI OKAYAMA, HIROSHI UCHIHARA, MASAHIKO IKEDA: "Improvement of Precision in Oxygen and Nitrogen Analysis of Raw Ceramic Powders - Introduction of a Press Machine to Seal the Flux Capsule -", JOURNAL OF THE CERAMIC SOCIETY OF JAPAN, NIPPON SERAMIKKUSU KYOKAI, JP, vol. 106, no. 10, 1 October 1998 (1998-10-01), JP , pages 1031 - 1033, XP093216217, ISSN: 0914-5400, DOI: 10.2109/jcersj.106.1031
- Annex "Further information about oxygen and nitrogenanalyzers”
- "LECO TC-436 Nitrogen Oxygen Analyzer", LABX, 12 December 2024 (2024-12-12), pages 1 - 3, XP093257154
- SHIMAMURA AKIHIRO, HOTTA YUJI, HYUGA HIDEKI, KONDO NAOKI, HIRAO KIYOSHI: "Effect of amounts and types of silicon nitride on thermal conductivity of Si<sub>3</sub>N<sub>4</sub>/epoxy resin composite", CERAMIC SOCIETY OF JAPAN. JOURNAL, NIPPON SERAMIKKUSU KYOKAI, TOKYO, JP, vol. 123, no. 1441, 1 January 2015 (2015-01-01), Tokyo, JP , pages 908 - 912, XP093317159, ISSN: 1882-0743, DOI: 10.2109/jcersj2.123.908
- KITAYAMA MIKITO, HIRAO KIYOSHI, TSUGE AKIRA, TORIYAMA MOTOHIRO, KANZAKI SHUZO: "Oxygen Content in ß‐Si3N4 Crystal Lattice", JOURNAL OF THE AMERICAN CERAMIC SOCIETY, BLACKWELL PUBLISHING, MALDEN, MA., US, vol. 82, no. 11, 1 November 1999 (1999-11-01), US , pages 3263 - 3265, XP093317163, ISSN: 0002-7820, DOI: 10.1111/j.1151-2916.1999.tb02238.x
- KITAYAMA MIKITO, HIRAO KIYOSHI, TSUGE AKIRA, WATARI KOJI, TORIYAMA MOTOHIRO, KANZAKI SHUZO: "Thermal Conductivity of β‐Si 3 N 4 : II, Effect of Lattice Oxygen", JOURNAL OF THE AMERICAN CERAMIC SOCIETY, BLACKWELL PUBLISHING, MALDEN, MA., US, vol. 83, no. 8, 1 August 2000 (2000-08-01), US , pages 1985 - 1992, XP093317164, ISSN: 0002-7820, DOI: 10.1111/j.1151-2916.2000.tb01501.x
- YOSHIOKA TAKAYUKI, HARUNO OKOCHI, RYOSUKE HASEGAWA: "Determination of Ultra Low Contents of Oxygen in High Purity Iron", MATERIALS TRANSACTIONS, JIM, vol. 34, no. 6, 1 January 1993 (1993-01-01), pages 504 - 510, XP093317170
- PEUCKERT ET AL.: "Oxygen distribution in silicon nitride powders", JOURNAL OF MATERIALS SCIENCE, vol. 22, 1987, XP001188503, DOI: 10.1007/BF01161483
- EXPERIMENTAL RESULTS
- English translation of JCRM R006

## Description

### Technical Field

The present disclosure relates to a silicon nitride powder and a method for producing the same, and a method for producing a silicon nitride sintered body.

### Background Art

Since silicon nitride is a material having excellent strength, hardness, toughness, heat resistance, corrosion resistance, thermal shock resistance and the like, it is used for various industrial parts such as die casting machines and melting furnaces, and automobile parts. In addition, since silicon nitride has excellent mechanical properties at a high temperature, application to a gas turbine part that requires high temperature strength and high temperature creep characteristics is being considered. For example, in Patent Literature 1, as a method for improving high temperature characteristics of a silicon nitride sintered body, setting a total amount of oxygen of the silicon nitride powder to 1.5 mass% or less in order to reduce a grain boundary phase purified during sintering, maintain a high melting point, and improve high temperature characteristics is discussed.

Use of a silicon nitride substrate as an insulating substrate for power modules of automobiles and machine tools is also being investigated. For example, Patent Literature 2 proposes use of a silicon nitride substrate as an aluminum-ceramic bonding substrate. In such applications, it is required to have high insulation and heat dissipation.
EP 3 020 686 relates to silicon nitride powder for a release agent of a polycrystalline silicon ingot casting mold, which has specific surface area, surface area to surface oxygen ratio and surface area to internal oxygen ratio. EP 3 156 366 relates to a silicon nitride powder which has specific surface area and frequency distribution curve, a β phase ratio of less than 40%, and an oxygen content of 0.20-0.95 mass%.

### Citation List

### Patent Literature

[Patent Literature 1] Japanese Unexamined Patent Publication No. H7-206409
[Patent Literature 2] Japanese Unexamined Patent Publication No. 2011-077546

### Summary of Invention

### Technical Problem

The silicon nitride substrate is required to have high thermal conductivity in order to realize excellent heat dissipation. In the silicon nitride sintered body used for the substrate, factors that influence thermal conductivity include, for example, an amount of defects present in the silicon nitride sintered body. The amount of defects in the silicon nitride sintered body is thought to be influenced by not only sintering conditions but also by physical properties of the silicon nitride powder used in the silicon nitride sintered body. Here, the present disclosure provides a silicon nitride powder that can be used to obtain a silicon nitride sintered body having high thermal conductivity and a method for producing the same. In addition, the present disclosure provides a method for producing a silicon nitride sintered body having high thermal conductivity.

### Solution to Problem

A silicon nitride powder according to an aspect of the present disclosure has an amount of internal oxygen of 0.6 mass% or less, and wherein a ratio of the amount of surface oxygen to the amount of internal oxygen is 2.0 or more. Since such a silicon nitride powder has a sufficiently small amount of internal oxygen, when it is used as a raw material for sintering, it is possible to obtain a silicon nitride sintered body having high thermal conductivity. The reason for this is considered to be that, when a silicon nitride powder having a small amount of internal oxygen is used, it is possible to reduce defects inside the silicon nitride sintered body. The amount of internal oxygen is measured by the following method: a peak 1 derived from surface oxygen, a peak 2 derived from internal oxygen and a peak 3 derived from nitrogen are detected when 0.01g of the silicon nitride powder is set in an oxygen and nitrogen analyzing device, and the temperature is raised from 20 C to 2,000 C at a heating rate of 8 C/second in a helium gas atmosphere; the peak 1 and the peak 2 are divided by the temperature T1 at which peak 3 rises; and the amount of internal oxygen and an amount of surface oxygen are determined from an integrated value of the peak 1 and the peak 2.

The amount of surface oxygen in the silicon nitride powder may be equal to or less than the amount of internal oxygen. Therefore, a silicon nitride sintered body having higher thermal conductivity can be obtained.

The amount of surface oxygen in the silicon nitride powder is larger than the amount of internal oxygen. A ratio of the amount of surface oxygen to the amount of internal oxygen is 2.0 or more. Since the amount of surface oxygen is large, a liquid phase is likely to be formed during sintering, and the strength of the silicon nitride sintered body can be improved.

A method for producing a silicon nitride powder according to an aspect of the present disclosure includes a step in which a silicon powder having an oxygen concentration of 0.4 mass% or less is fired under a mixed atmosphere containing nitrogen and at least one selected from the group consisting of hydrogen and ammonia to obtain a fired product, and a step in which the fired product is treated with hydrofluoric acid having a hydrogen fluoride concentration of 10 to 40 mass%. According to the production method, since the silicon powder having a sufficiently low oxygen concentration is used, the silicon nitride powder having a sufficiently small amount of internal oxygen can be obtained. In addition, since the fired product is treated with hydrofluoric acid having a hydrogen fluoride concentration of 10 to 40 mass%, the amount of surface oxygen can be adjusted within a range that is not significantly different from that of internal oxygen. Therefore, it can be suitably used as a silicon nitride powder for producing a silicon nitride sintered body having sufficient strength and high thermal conductivity.

A method for producing a silicon nitride sintered body according to an aspect of the present disclosure includes a step in which a raw material for sintering containing the silicon nitride powder produced according to the above method for producing the silicon nitride powder is molded and sintered. According to the production method, it is possible to produce the silicon nitride sintered body having high thermal conductivity.

### Advantageous Effects of Invention

According to the present disclosure, it is possible to provide a silicon nitride powder that can be used to obtain a silicon nitride sintered body having high thermal conductivity and a method for producing the same. In addition, it is possible to provide a method for producing a silicon nitride sintered body having high thermal conductivity.

### Brief Description of Drawings

FIG. 1 is a diagram showing an example of an oxygen and nitrogen analysis chart.
FIG. 2 is a diagram showing an oxygen and nitrogen analysis chart of Example 1.

### Description of Embodiments

One embodiment of the present disclosure will be described below with reference to the drawings. However, the following embodiments are examples for explaining the present disclosure, and are not intended to limit the present disclosure to the following content.

An amount of internal oxygen in a silicon nitride powder (Si₃N₄ powder) is 0.6 mass% or less. Internal oxygen is oxygen that is present inside the silicon nitride powder without being exposed on the surface. When used as a raw material of the silicon nitride sintered body, the amount of internal oxygen may be 0.5 mass% or less or 0.4 mass% or less in order to further increase thermal conductivity of the silicon nitride sintered body. The lower limit of the amount of internal oxygen is not particularly limited, and may be 0.1 mass% or more or 0.2 mass% or more in consideration of ease of production. The amount of internal oxygen can be adjusted by changing the oxygen concentration in the raw material of the silicon nitride powder.

Surface oxygen is oxygen that binds or adheres to the surface of the silicon nitride powder. The amount of surface oxygen can be adjusted by performing a surface treatment on the silicon nitride powder.

In the present invention, when used as a raw material of the silicon nitride sintered body, the amount of surface oxygen in the silicon nitride powder is larger than the amount of internal oxygen and may be 0.7 mass% or more or 0.8 mass% or more in order to increase the strength of the silicon nitride sintered body. The upper limit of the amount of surface oxygen is not particularly limited, and may be 1.5 mass% or less or 1.0 mass% or less in consideration of ease of production.

A total amount of oxygen in the silicon nitride powder may be 0.5 mass% or more, 0.7 mass% or more, or 1.0 mass% or more. A total amount of oxygen in the silicon nitride powder may be 2.0 mass% or less or 1.5 mass% or less. As an example, the amount may be 0.5 to 2.0 mass% or 0.7 to 1.5 mass%. In the present disclosure, the total amount of oxygen is the ratio of the mass of oxygen to the total mass of the silicon nitride powder. On the other hand, the amount of internal oxygen is the ratio of the mass of the internal oxygen to the total mass of the silicon nitride powder. In addition, the amount of surface oxygen is the ratio of the mass of surface oxygen to the total mass of the silicon nitride powder. Therefore, the following formula is established. Total amount of oxygen (mass%)=amount of internal oxygen (mass%)+amount of surface oxygen (mass%)

An amount of internal oxygen, an amount of surface oxygen and a total amount of oxygen in the present disclosure are determined according to the following procedure. The amount of oxygen and the amount of nitrogen in the silicon nitride powder are analyzed using an oxygen and nitrogen analyzing device. A measurement sample is heated from 20 °C to 2,000 °C at a heating rate of 8 °C/sec in a helium gas atmosphere. As the temperature rises, desorbed oxygen is detected. At the beginning of temperature rise, oxygen bound to the surface of the silicon nitride powder is desorbed. The amount of surface oxygen is determined by quantifying the amount of desorbed oxygen.

Then, when the temperature reaches about 1,400 °C, decomposition of silicon nitride starts. The start of decomposition of silicon nitride can be recognized by the start of detection of nitrogen. When decomposition of silicon nitride starts, oxygen inside the silicon nitride powder is desorbed. The amount of internal oxygen is determined by quantifying oxygen desorbed at this stage.

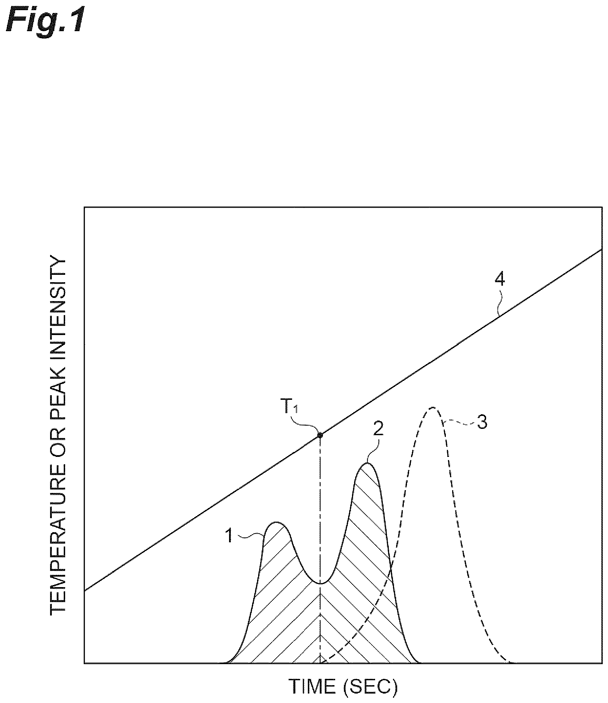

FIG. 1 is an example of a chart obtained by oxygen and nitrogen analysis of silicon nitride. A peak 1 is a peak of surface oxygen and a peak 2 is a peak of internal oxygen. A peak 3 is a peak of nitrogen. A straight line 4 indicates a temperature rise straight line. The peak 1 and the peak 2 are divided at a temperature T₁ at which generation of nitrogen starts. The temperature T₁ is a temperature at which detection of the peak 3 starts, and is generally between 1,350 and 1,500 °C. The temperature at which detection of the peak 1 starts (the temperature at the left end of the peak 1) is, for example, 750 to 1,200 °C. The temperature at which detection of the peak 2 ends (the temperature at the right end of the peak 2) is, for example, 1,600 to 1,800 °C. An amount of internal oxygen and an amount of surface oxygen are determined based on a calibration curve from an integrated value (area) of the peaks 1 and 2. In addition, a total of the amount of internal oxygen and the amount of surface oxygen is equal to a total amount of oxygen.

In FIG. 1, the left end (temperature T₁) of the peak 3 matches the deepest part of the valley of the peaks 1 and 2, but they may not completely match. However, generally, the temperature T₁ (the left end of the peak 3) is positioned between temperatures at which tops of the peak 1 and the peak 2 are detected.

Since the silicon nitride powder as shown in FIG. 1 has a sufficiently small amount of internal oxygen, when used as a raw material for sintering, it is possible to obtain the silicon nitride sintered body having excellent thermal conductivity. The reason for this is considered to be that, when a silicon nitride powder having a small amount of internal oxygen is used, it is possible to reduce defects inside the silicon nitride sintered body. As shown in FIG. 1, the amount of surface oxygen in the silicon nitride powder may be equal to or less than the amount of internal oxygen. Therefore, it is possible to obtain a silicon nitride sintered body having higher thermal conductivity.

In FIG. 1, the integrated value of the peak 2 is larger than the integrated value of the peak 1, but the values are not limited to this magnitude relationship. For example, the integrated value of the peak 1 may be larger than the integrated value of the peak 2. In this case, the amount of surface oxygen is larger than the amount of internal oxygen, and the silicon nitride sintered body having excellent strength can be produced. The ratio of the integrated value of the peak 1 to the integrated value of the peak 2, that is, the ratio of the amount of surface oxygen to the amount of internal oxygen, is 2.0 or more in order to sufficiently increase thermal conductivity of the silicon nitride sintered body.

The ratio of the amount of surface oxygen to the amount of internal oxygen is 2.0 or more. In particular, when the total amount of oxygen is set to 1.0 mass% or less and the ratio of the amount of surface oxygen to the amount of internal oxygen is set to 1.5 or more, it is possible to further improve the thermal conductivity. The upper limit of the ratio of the amount of surface oxygen to the amount of internal oxygen may be 5.0 or 4.0.

A method for producing a silicon nitride powder according to one embodiment includes a pretreatment step in which a silicon powder is pretreated using a pretreatment solution containing hydrofluoric acid and a silicon powder having an oxygen concentration of 0.4 mass% or less is obtained, a firing step in which the silicon powder is fired under a mixed atmosphere containing nitrogen and hydrogen to obtain a fired product, a crushing step in which the fired product is crushed, and a post-treatment step in which the crushed fired product is treated with hydrofluoric acid having a hydrogen fluoride concentration of 10 to 40 mass%.

In the pretreatment step, using a pretreatment solution containing hydrofluoric acid, the amount of oxygen bonded to the silicon powder is reduced. The pretreatment solution may be a mixed acid which is a mixture containing hydrofluoric acid and hydrochloric acid, or only hydrofluoric acid may be used. The temperature of the pretreatment solution in the pretreatment step is, for example, 40 to 80 °C. In addition, the time for immersion in the pretreatment solution is, for example, 1 to 10 hours.

The oxygen concentration of the silicon powder obtained in the pretreatment step is 0.4 mass% or less, preferably 0.3 mass% or less, and more preferably 0.2 mass% or less. The lower limit of the oxygen concentration is not particularly limited and may be 0.1 mass% or more in consideration of ease of production.

In the firing step, the silicon powder is fired under a mixed atmosphere containing nitrogen and at least one selected from the group consisting of hydrogen and ammonia to obtain a nitride. A total of a contained ratio of hydrogen and ammonia in the mixed atmosphere may be 10 to 40 volume%. The firing temperature may be, for example, 1,100 to 1,450 °C or 1,200 to 1,400 °C. The firing time may be, for example, 30 to 100 hours.

When the silicon nitride obtained in the firing step is in the form of an ingot, the crushing step of crushing the fired product is performed. Crushing may be performed in a plurality of stages of coarse crushing and fine crushing. Wet crushing may be performed using, for example, a ball mill. Silicon nitride may be crushed until the specific surface area is 8.0 to 15.0 m²/g.

In the post-treatment step, the crushed fired product and hydrofluoric acid having a hydrogen fluoride concentration of 10 to 40 mass% are mixed and treated. For example, the fired product may be dispersed in hydrofluoric acid for treatment. The concentration of hydrogen fluoride in the hydrofluoric acid may be 12 to 30 mass%. In the post-treatment step, the temperature of the hydrofluoric acid is, for example, 40 to 80 °C. In addition, the time for which the silicon nitride powder is immersed in the hydrofluoric acid is, for example, 1 to 10 hours.

According to such a production method, a total amount of oxygen, an amount of internal oxygen and an amount of surface oxygen in the silicon nitride powder can be adjusted within the above ranges. The silicon nitride sintered body formed using the silicon nitride powder obtained in this manner has high thermal conductivity.

A method for producing a silicon nitride sintered body according to one embodiment includes a step of molding and firing a raw material for sintering containing the above silicon nitride powder as a main component. The raw material for sintering may contain an oxide-based sintering aid in addition to the silicon nitride powder. Examples of the oxide-based sintering aids may include Y₂O₃, MgO and Al₂O₃. The content of the oxide-based sintering aid in the raw material for sintering may be, for example, 3 to 10 mass%.

In the above step, for example, the above raw material for sintering is pressed with a molding pressure of 3.0 to 30 MPa to obtain a molded component. The molded component may be produced with a uniaxial pressure or may be produced by CIP. In addition, it may be sintered while being molded with a hot press. The molded component may be sintered in an inert gas atmosphere of nitrogen gas, argon gas, or the like. The pressure during firing may be 0.7 to 1 MPa. The firing temperature may be 1,860 to 2,100 °C or 1,880 to 2,000 °C. The firing time at the firing temperature may be 6 to 20 hours or 8 to 16 hours. The rate of temperature rise to the firing temperature may be, for example, 1.0 to 10.0 °C/hour.

The silicon nitride sintered body produced in this manner has excellent heat dissipation because it has high thermal conductivity. In addition, when the amount of surface oxygen in the silicon nitride powder used as a raw material increases, the silicon nitride sintered body having excellent strength can be obtained. The thermal conductivity of the silicon nitride sintered body may be, for example, 100 W/mK or more or 110 W/mK or more under an environment of 25 °C. The 3-point bending strength of the silicon nitride sintered body may be, for example, 500 MPa or more or 600 MPa or more at room temperature.

While some embodiments have been described above, the present disclosure is not limited to the embodiments.

### [Examples]

The content of the present disclosure will be described in more detail with reference to examples and comparative examples, but the present disclosure is not limited to the following examples. Examples 1 and 4 to 8 are reference examples falling outside the scope of the appended claims.

### (Example 1)

### <Preparation of silicon nitride powder>

A commercially available silicon powder (specific surface area: 3.0 m²/g) was immersed in a mixed acid for a pretreatment. In the pretreatment, a silicon powder was put into the mixed acid whose temperature was adjusted to 60 °C and immersed for 2 hours. Regarding the mixed acid used in the pretreatment, a mixed acid containing commercially available hydrochloric acid (concentration: 35 mass%) and hydrofluoric acid (concentration: 55 mass%) at a mass ratio of 10:1 was used. Then, the silicon powder was removed from the mixed acid and washed with water, and dried under a nitrogen atmosphere. The oxygen concentration of the dried silicon powder was 0.4 mass%. The oxygen concentration was measured by an infrared absorption method.

A molded component (bulk density: 1.4 g/cm³) was produced using the dried silicon powder, and fired using an electric furnace at 1,400 °C for 60 hours to produce a silicon nitride ingot. An atmosphere during firing was a mixed atmosphere containing nitrogen and hydrogen (N₂:H₂=80:20, based on volume). The obtained ingot was coarsely crushed and then wet crushed with a ball mill. Water was used as a solvent during wet crushing.

The silicon nitride powder obtained by wet crushing was subjected to a post-treatment of immersion in hydrofluoric acid (hydrogen fluoride concentration: 15 mass%) at a temperature of 60 °C for 2 hours. Then, the silicon nitride powder was removed from hydrofluoric acid, washed with water, and dried under a nitrogen atmosphere. In this manner, the silicon nitride powder of Example 1 was obtained.

### <Evaluation of silicon nitride powder>

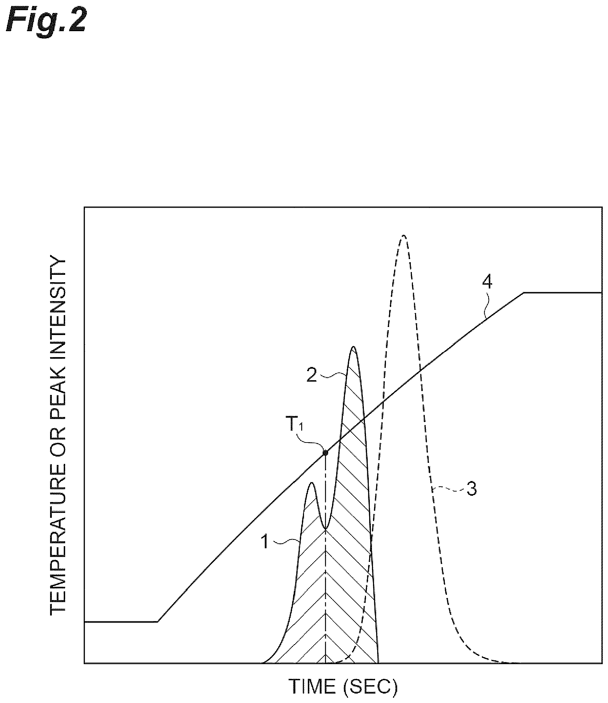

An amount of internal oxygen and an amount of surface oxygen in the silicon nitride powder were measured according to the following procedure. 0.01 g of a measurement sample was set in an oxygen and nitrogen analyzing device (device name: EMGA-920 commercially available from Horiba Ltd.). In a helium gas atmosphere, the temperature was raised from 20 °C to 2,000 °C at a heating rate of 8 °C/sec. During temperature rise, oxygen and nitrogen were detected. The measurement results are shown in FIG. 2. As shown in FIG. 2, a peak 1 derived from surface oxygen, a peak 2 derived from internal oxygen, and a peak 3 derived from nitrogen were detected. A straight line 4 indicates temperature.

The temperature at which the peak 3 rises, that is, the temperature T₁ that divides the peak 1 and the peak 2, was 1,392 °C. An amount of surface oxygen and an amount of internal oxygen were determined from integrated values of the peak 1 and the peak 2, based on a separately determined calibration curve showing the relationship between integrated values of peaks and amounts of oxygen. The results are shown in Table 1.

### <Production of silicon nitride sintered body>

90 parts by mass of the prepared silicon nitride powder, 5 parts by mass of Y₂O₃ powder having an average particle size of 1.5 µm, and 5 parts by mass of Yb₂O₃ powder having an average particle size of 1.2 µm were mixed and wet-mixed in methanol for 4 hours. Then, the mixed powder obtained by drying was molded in a mold at a pressure of 10 MPa, and CIP molding was then additionally performed at a pressure of 25 MPa. The obtained molded component was set in a carbon crucible together with a packed powder composed of a mixed powder containing a silicon nitride powder and a BN powder, and sintered under a nitrogen-pressurized atmosphere of 1 MPa at a temperature of 1,900 °C for 12 hours to produce a silicon nitride sintered body.

### <Evaluation of silicon nitride sintered body>

The silicon nitride sintered body was ground to produce a disk body of 10 mmφ×3 mm for thermal conductivity measurement. A thermal diffusivity and a specific heat capacity were measured according to a laser flash method (according to JIS R1611), and the product of the density, the thermal diffusivity and the specific heat capacity of the sintered body was calculated and used as the thermal conductivity at room temperature. In addition, a test piece for strength measurement was produced according to JIS R1601:2008, and the 3-point bending strength was measured at room temperature. The measurement results are shown in Table 1 as relative values based on the measured values of Example 1.

### (Examples 2 to 8 and Comparative Examples 1 to 3)

Silicon nitride powders were prepared in the same manner as in Example 1 except that the time for which the metal silicon powder was immersed in the mixed acid during the pretreatment was changed to between 1 to 5 hours so that the oxygen concentration of the silicon powder was changed as shown in Table 1, and the concentration of hydrofluoric acid (concentration of hydrogen fluoride) used in the post-treatment was changed as shown in Table 1. In Examples 4 to 8, the time for which the metal silicon powder was immersed in the mixed acid during the pretreatment was set to 2 hours as in Example 1. In Examples 2 and 3, the immersion time was set to 3 hours and 5 hours. In Comparative Examples 1 to 3, the immersion time was set to 1 hour. In the same manner as in Example 1, an amount of surface oxygen and an amount of internal oxygen were determined for the examples and comparative examples. In addition, the ratio of the amount of surface oxygen to the amount of internal oxygen (indicated as "surface/inside" in Table 1) was determined. The results are shown in Table 1.

In the same manner as in Example 1, silicon nitride sintered bodies were produced using the silicon nitride powder and evaluated. The measurement results are shown in Table 1 as relative values based on the measured value of Example 1.

**[Table 1]**

| | Silicon powder | Post -treatment | Silicon nitride powder | | | | Silicon nitride sintered body | |
|---|---|---|---|---|---|---|---|---|
| | Concentration of oxygen | Concentration of hydrofluoric acid | Amount of internal oxygen | Amount of surface oxygen | Surface /inside | Total amount of oxygen | Thermal conductivity | Strength |
| | mass% | mass% | mass% | mass% | | mass% | Relative value | Relative value |
| Reference Example 1 | 0.4 | 15 | 0.6 | 0.6 | 1.0 | 1.2 | 1.00 | 1.00 |
| Example 2 | 0.2 | 15 | 0.3 | 0.6 | 2.0 | 0.9 | 1.21 | 0.98 |
| Example 3 | 0.1 | 15 | 0.2 | 0.6 | 3.0 | 0.8 | 1.30 | 0.97 |
| Reference Example 4 | 0.4 | 18 | 0.6 | 0.5 | 0.8 | 1.1 | 1.04 | 0.99 |
| Reference Example 5 | 0.4 | 20 | 0.6 | 0.3 | 0.5 | 0.9 | 1.08 | 0.96 |
| Reference Example 6 | 0.4 | 13 | 0.6 | 0.7 | 1.2 | 1.3 | 0.98 | 1.18 |
| Reference Example 7 | 0.4 | 10 | 0.6 | 0.9 | 1.5 | 1.5 | 0.96 | 1.35 |
| Reference Example 8 | 0.4 | 40 | 0.6 | 0.2 | 0.3 | 0.8 | 1.04 | 0.83 |
| Comparative Example 1 | 0.6 | 15 | 0.7 | 0.6 | 0.9 | 1.3 | 0.82 | 1.02 |
| Comparative Example 2 | 0.6 | 20 | 0.7 | 0.3 | 0.4 | 1.0 | 0.88 | 0.97 |
| Comparative Example 3 | 0.6 | 10 | 0.7 | 0.9 | 1.3 | 1.6 | 0.83 | 1.30 |

### Industrial Applicability

According to the present disclosure, it is possible to provide a silicon nitride powder that can be used to obtain a silicon nitride sintered body having high thermal conductivity and a method for producing the same. In addition, it is possible to provide a method for producing a silicon nitride sintered body having high thermal conductivity.

## Claims

1. A silicon nitride powder having an amount of internal oxygen of 0.6 mass% or less, the amount being measured by the following method,
wherein a peak 1 derived from surface oxygen, a peak 2 derived from internal oxygen and a peak 3 derived from nitrogen are detected when 0.01g of the silicon nitride powder is set in an oxygen and nitrogen analyzing device, and the temperature is raised from 20°C to 2,000°C at a heating rate of 8°C/second in a helium gas atmosphere,
wherein the peak 1 and the peak 2 are divided by the temperature T₁ at which peak 3 rises,
wherein the amount of internal oxygen and an amount of surface oxygen are determined from an integrated value of the peak 1 and the peak 2, and
wherein a ratio of the amount of surface oxygen to the amount of internal oxygen is 2.0 or more.

2. The silicon nitride powder according to claim 1, wherein a ratio of the amount of surface oxygen to the amount of internal oxygen is 5.0 or less.

3. The silicon nitride powder according to claim 1 or 2, wherein an amount of surface oxygen is 1.5 mass% or less.

4. A method for producing a silicon nitride powder, comprising:
a step in which a silicon powder having an oxygen concentration of 0.4 mass% or less is fired under a mixed atmosphere containing nitrogen and at least one selected from the group consisting of hydrogen and ammonia to obtain a fired product; and
a step in which the fired product is treated with hydrofluoric acid having a hydrogen fluoride concentration of 10 to 40 mass%.

5. The method for producing a silicon nitride powder according to claim 4, wherein an amount of internal oxygen is 0.6 mass% or less, the amount being measured by the following method,
wherein a peak 1 derived from surface oxygen, a peak 2 derived from internal oxygen and a peak 3 derived from nitrogen are detected when 0.01g of the silicon nitride powder is set in an oxygen and nitrogen analyzing device, and the temperature is raised from 20°C to 2,000°C at a heating rate of 8°C/second in a helium gas atmosphere,
wherein the peak 1 and the peak 2 are divided by the temperature T₁ at which peak 3 rises, and
wherein the amount of internal oxygen and an amount of surface oxygen are determined from an integrated value of the peak 1 and the peak 2.

6. A method for producing a silicon nitride sintered body, comprising a step in which a raw material for sintering containing the silicon nitride powder produced according to claim 4 or 5 is molded and sintered.

## Patentansprüche

1. Siliciumnitridpulver mit einer Menge an internem Sauerstoff von 0,6 Masse-% oder weniger, wobei die Menge durch das folgende Verfahren gemessen wird,
worin ein Peak 1, der von Oberflächensauerstoff herrührt, ein Peak 2, der von internem Sauerstoff herrührt, und ein Peak 3, der von Stickstoff herrührt, detektiert werden, wenn 0,01 g des Siliciumnitridpulvers in eine Sauerstoff- und Stickstoffanalysevorrichtung eingeführt wird und die Temperatur von 20°C auf 2.000°C bei einer Erwärmungsgeschwindigkeit von 8°C/Sekunde in einer Heliumgasatmosphäre erhöht wird,
wobei der Peak 1 und der Peak 2 durch die Temperatur T₁, bei der Peak 3 ansteigt, unterteilt werden,
wobei die Menge an internem Sauerstoff und die Menge an Oberflächensauerstoff aus einem Integralwert für den Peak 1 und den Peak 2 bestimmt werden und
wobei ein Verhältnis der Menge an Oberflächensauerstoff zu der Menge an internem Saurestoff 2,0 oder mehr beträgt.

2. Siliciumnitridpulver gemäß Anspruch 1, wobei ein Verhältnis der Menge an Oberflächensauerstoff zu der Menge an internem Saurestoff 5,0 oder weniger beträgt.

3. Siliciumnitridpulver gemäß Anspruch 1 oder 2, wobei eine Menge an Oberflächensauerstoff 1,5 Masse-% oder weniger beträgt.

4. Verfahren zur Herstellung eines Siliciumnitridpulvers, umfassend:
einen Schritt, in dem ein Siliciumpulver mit einer Sauerstoffkonzentration von 0,4 Masse-% oder weniger unter einer Mischatmosphäre, die Stickstoff und mindestens eines, ausgewählt aus der Gruppe, bestehend aus Wasserstoff und Ammoniak, enthält, gebrannt wird, um ein gebranntes Produkt zu erhalten, und
einen Schritt, in dem das gebrannte Produkt mit Flusssäure mit einer Fluorwasserstoffkonzentration von 10 bis 40 Masse-% behandelt wird.

5. Verfahren zur Herstellung eines Siliciumnitridpulvers gemäß Anspruch 4,
wobei eine Menge an internem Sauerstoff 0,6 Masse-% oder weniger beträgt, wobei die Menge durch das folgende Verfahren gemessen wird,
worin ein Peak 1, der von Oberflächensauerstoff herrührt, ein Peak 2, der von internem Sauerstoff herrührt, und ein Peak 3, der von Stickstoff herrührt, detektiert werden, wenn 0,01 g des Siliciumnitridpulvers in eine Sauerstoff- und Stickstoffanalysevorrichtung eingeführt wird und die Temperatur von 20°C auf 2.000°C bei einer Erwärmungsgeschwindigkeit von 8°C/Sekunde in einer Heliumgasatmosphäre erhöht wird,
wobei der Peak 1 und der Peak 2 durch die Temperatur T₁, bei der Peak 3 ansteigt, unterteilt werden und
wobei die Menge an internem Sauerstoff und die Menge an Oberflächensauerstoff aus einem Integralwert für den Peak 1 und den Peak 2 bestimmt werden.

6. Verfahren zur Herstellung eines Siliciumnitrid-Sinterkörpers, umfassend einen Schritt, in dem ein Ausgangsmaterial zur Sinterung, das das gemäß Anspruch 4 oder 5 hergestellte Siliciumnitridpulver enthält, geformt und gesintert wird.

## Revendications

1. Poudre de nitrure de silicium présentant une quantité d'oxygène interne inférieure ou égale à 0,6 % en masse, la quantité étant mesurée par le procédé suivant,
dans laquelle un pic 1 dérivé de l'oxygène de surface, un pic 2 dérivé de l'oxygène interne et un pic 3 dérivé de l'azote sont détectés lorsque 0,01 g de la poudre de nitrure de silicium est placé dans un dispositif d'analyse d'oxygène et d'azote, et que la température est augmentée de 20°C à 2 000°C à une vitesse de chauffage de 8°C/seconde dans une atmosphère gazeuse d'hélium,
dans laquelle le pic 1 et le pic 2 sont divisés par la température T₁, à laquelle le pic 3 s'élève,
dans laquelle la quantité d'oxygène interne et une quantité d'oxygène de surface sont déterminées à partir d'une valeur intégrée du pic 1 et du pic 2, et
dans laquelle un rapport de la quantité d'oxygène de surface par rapport à la quantité d'oxygène interne est supérieur ou égal à 2,0.

2. Poudre de nitrure de silicium selon la revendication 1, dans laquelle un rapport de la quantité d'oxygène de surface par rapport à la quantité d'oxygène interne est inférieur ou égal à 5,0.

3. Poudre de nitrure de silicium selon la revendication 1 ou la revendication 2, dans laquelle une quantité d'oxygène de surface est inférieure ou égale à 1,5 % en masse.

4. Procédé de production d'une poudre de nitrure de silicium, comprenant :
une étape dans laquelle une poudre de silicium présentant une concentration en oxygène inférieure ou égale à 0,4 % en masse est cuite sous une atmosphère mixte contenant de l'azote et au moins un sélectionné parmi le groupe consistant en hydrogène et ammoniac pour obtenir un produit cuit ; et
une étape dans laquelle le produit cuit est traité avec de l'acide fluorhydrique présentant une concentration en fluorure d'hydrogène de 10 à 40 % en masse.

5. Procédé de production d'une poudre de nitrure de silicium selon la revendication 4, dans lequel une quantité d'oxygène interne est inférieure ou égale à 0,6 % en masse, la quantité étant mesurée par le procédé suivant,
dans lequel un pic 1 dérivé de l'oxygène de surface, un pic 2 dérivé de l'oxygène interne et un pic 3 dérivé de l'azote sont détectés lorsque 0,01 g de la poudre de nitrure de silicium est placé dans un dispositif d'analyse d'oxygène et d'azote, et que la température est augmentée de 20°C à 2 000°C à une vitesse de chauffage de 8°C/seconde dans une atmosphère gazeuse d'hélium,
dans lequel le pic 1 et le pic 2 sont divisés par la température T₁, à laquelle le pic 3 s'élève, et
dans lequel la quantité d'oxygène interne et une quantité d'oxygène de surface sont déterminées à partir d'une valeur intégrée du pic 1 et du pic 2.

6. Procédé de production d'un corps fritté en nitrure de silicium, comprenant une étape dans laquelle une matière première pour frittage, qui contient la poudre de nitrure de silicium produite selon la revendication 4 ou la revendication 5, est moulée et frittée.
